(19) Europäisches Patentamt
European Patent Office
Office européen des brevets

(11) Veröffentlichungsnummer: **0 338 355 B1**

(12) **EUROPÄISCHE PATENTSCHRIFT**

(45) Veröffentlichungstag der Patentschrift: **11.11.92**

(51) Int. Cl.[5]: **B32B 27/36**, B29C 47/06, C08K 5/34, C08L 69/00

(21) Anmeldenummer: **89106240.8**

(22) Anmeldetag: **08.04.89**

Die Akte enthält technische Angaben, die nach dem Eingang der Anmeldung eingereicht wurden und die nicht in dieser Patentschrift enthalten sind.

(54) **Verschmutzungsbeständige Polycarbonat-Platten.**

(30) Priorität: **22.04.88 US 184850**

(43) Veröffentlichungstag der Anmeldung:
**25.10.89 Patentblatt 89/43**

(45) Bekanntmachung des Hinweises auf die Patenterteilung:
**11.11.92 Patentblatt 92/46**

(84) Benannte Vertragsstaaten:
**AT DE ES FR GB IT NL**

(56) Entgegenhaltungen:
**EP-A- 284 865**
**EP-A- 320 632**
**EP-A- 0 110 221**
**EP-A- 0 247 480**
**DE-A- 1 670 951**

(73) Patentinhaber: **MILES INC.**
**One Mellon Center 500 Grant Str.**
**Pittsburgh, PA 15219-2502(US)**

(72) Erfinder: **Paul, Winfried G., Dr.**
**2304 Ben Franklin Drive**
**Pittsburgh PA 15237(US)**
Erfinder: **Krishnan, Sivaram, Dr.**
**1653 Little Meadow Road**
**Pittsburgh PA 15237(US)**
Erfinder: **Sarver, Larry D.**
**130 Mc. Candless Place**
**Wexford PA 15090(US)**

(74) Vertreter: **Gremm, Joachim, Dr. et al**
**Bayer AG Konzernverwaltung RP Patente Konzern**
**W-5090 Leverkusen 1, Bayerwerk(DE)**

EP 0 338 355 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft verschmutzungsbeständige Platten, die in erster Linie aus Polycarbonat-Harz hergestellt sind.

Polycarbonat-Harze sind durch ihre Transparenz, mechanische Festigkeit und Maßhaltigkeit gekennzeichnet. Diese Eigenschaften machen Polycarbonat zu einer idealen Wahl für die Herstellung von Platten, die bei der Verglasung verwendet werden sollen. Einer der Nachteile der Verwendung von Polycarbonat als Frontscheiben von Verkaufsautomaten ist der, daß sie bei Berührung mit Flecken verursachenden Nahrungsmitteln Flecken bekommen.

Es ist ein Ziel der vorliegenden Erfindung, Platten auf Polycarbonat-Basis verfügbar zu machen, die gegenüber einer solchen Verschmutzung durch Flecken beständig sind.

Es ist bekannt, daß der Stand der Technik die CA-PS 1 208 873 einschließt, die eine Platte auf Polycarbonat-Basis offenbart hat, die gegen UV-Strahlung beständig gemacht wurde. Danach ist eine Platte so aufgebaut, daß sie eine Kernschicht aus Polycarbonat umfaßt, mit der eine dazwischenliegende UV-Absorptionsschicht und eine Deckschicht haftend verbunden sind. Der Zweck der Deckschicht besteht darin, die Verdampfung des UV-Absorbers aus der Zwischenschicht zu verhindern. Die dazwischenliegende UV-Absorptionsschicht kann aus Polycarbonat hergestellt werden und enthält Derivate des Benzotriazols als UV-Absorber. Ebenfalls bekannt ist die Deutsche Patentanmeldung 1 670 951, in der Polycarbonat-Formteile, einschließlich Bänder, offenbart sind, die dadurch gegen UV-Strahlung beständig gemacht werden, daß eine Bis-benzotriazol-Verbindung darin eingearbeitet wird. Ein Verfahren zur Beschichtung einer Polycarbonat-Platte mit einer Schutzschicht wurde in der GB-Patentanmeldung 2 028 228 offenbart. Es wird angegeben, daß eine Schicht, vorzugsweise aus Polymethacrylat, die vorteilhafterweise einen UV-Absorber enthält, durch Co-extrusion auf die Platte aufgebracht wird. Die US-PS 3 892 889 offenbart UV-stabilisierte Polycarbonat-Formlinge, deren Oberflächen mit einer Benzotriazol enthaltenden Lösung behandelt sind. Die DE-OS 3 617 978 offenbart coextrudierte Platten auf der Basis eines Polycarbonat-Harzes, die mit einer UV-absorbierenden Schicht bedeckt sind, die aus einem ein Bis-benzotriazol enthaltenden verzweigten Polycarbonat-Harz hergestellt ist. Ebenfalls relevant ist die Europäische Patentanmeldung 110 221, die eine Platte offenbart, die aus einer Kernschicht aus nicht mehr als 0,5 Gew.-% eines UV-Absorbers enthaltendem Polycarbonat besteht und auf wenigstens einer Seite eine Überzugsschicht aufweist, die mit der Kernschicht coextrudiert ist und wenigstens 3 % eines UV-Absorbers enthält.

Gemäß der älteren europäischen Patentanmeldung EP-A-0 320 632, veröffentlicht am 21.06.89, sind beschichtete Formkörper und ein Verfahren zu ihrer Herstellung bekannt. Die Beschichtungen enthalten spezielle dimere UV-Absorber. Sowohl die Formkörper als auch die Beschichtungen können aus linearem Polycarbonat bestehen.

Gemäß der älteren europäischen Patentanmeldung EP-A-0 284 865, veröffentlicht am 05.10.88, sind Polydiorganosiloxan-Polycarbonat-Blockcokondensate mit verbessertem Schutz gegen UV-Licht bekannt. Darin sind auch mehrschichtige Kunststofftafeln beschrieben, in denen die Kernschicht aus Polycarbonat besteht und die auf einer oder beiden Seiten UV-Absorptionsschichten aus Polydiorganosiloxan-Polycarbonat-Blockcokondensaten haben, die 1 bis 15 Gew.-% eines dimeren UV-Absorbers enthalten.

In beiden Dokumenten hat der UV-Absorber jedoch eine andere Struktur, so daß der Gegenstand der vorliegenden Erfindung neuheitlich gegen die Lehre dieser beiden älteren europäischen Patentanmeldungen abgegrenzt ist.

Eine Polycarbonat-Platte wird dadurch mit einer verbesserten Beständigkeit gegen Verschmutzung durch Flecken ausgestattet, daß wenigstens eine ihrer Oberflächen mit einer anhaftenden Schicht überzogen wird, die ein lineares Polycarbonat-Harz und ein bestimmtes Bis-benzotriazol umfaßt. In einer bevorzugten Ausführungsform werden die Platte und die Schicht coextrudiert und zur Bewirkung der Haftung an ihren Oberflächen in Kontakt gebracht, während sich beide auf einer höheren Temperatur befinden, die von der Extrusion herrührt.

Gegenstand der vorliegenden Erfindung ist somit eine Polycarbonatplatte gemäß Anspruch 1 des vorliegenden Patentes, wobei das Bis-benzotriazol in der anhaftenden Schicht vorzugsweise in einer Menge von 3 % bis 10 %, bezogen auf das Gewicht der Schicht, vorliegt.

Die in der Praxis der vorliegenden Erfindung brauchbaren Polycarbonat-Harze sind Homopolycarbonat-, Copolycarbonat- und Terpolycarbonat-Harze oder deren Mischungen. Die Polycarbonat-Harze haben vorzugsweise Molekulargewichte von 18 000 bis 200 000 (Gewichtsmittel des Molekulargewichts), besonders bevorzugt von 20 000 bis 80 000, und können alternativ durch ihren Schmelzfluß von 1 bis 65 g/10 min bei 300 °C gemäß ASTM D-1238 gekennzeichnet werden. Diese Polycarbonate können beispielsweise mittels des bekannten Zweiphasen-Grenzflächen-Verfahrens aus Phosgen und Dihydroxy-Verbindungen durch Polykondensation hergestellt werden (siehe die DE-OSen 2 063 050, 2 063 052, 1 570 703, 2 211 956, 2

211 957 und 2 248 817 und die FR-PS 1 561 518 sowie die Monographie von H. Schnell, "Chemistry and Physics of Polycarbonates", Interscience Publishers, New York 1964, auf die hier sämtlich Bezug genommen wird).

Im hiesigen Kontext entsprechen Dihydroxy-Verbindungen, die für die Herstellung der Polycarbonate der Erfindung geeignet sind, den Strukturformeln (1) oder (2)

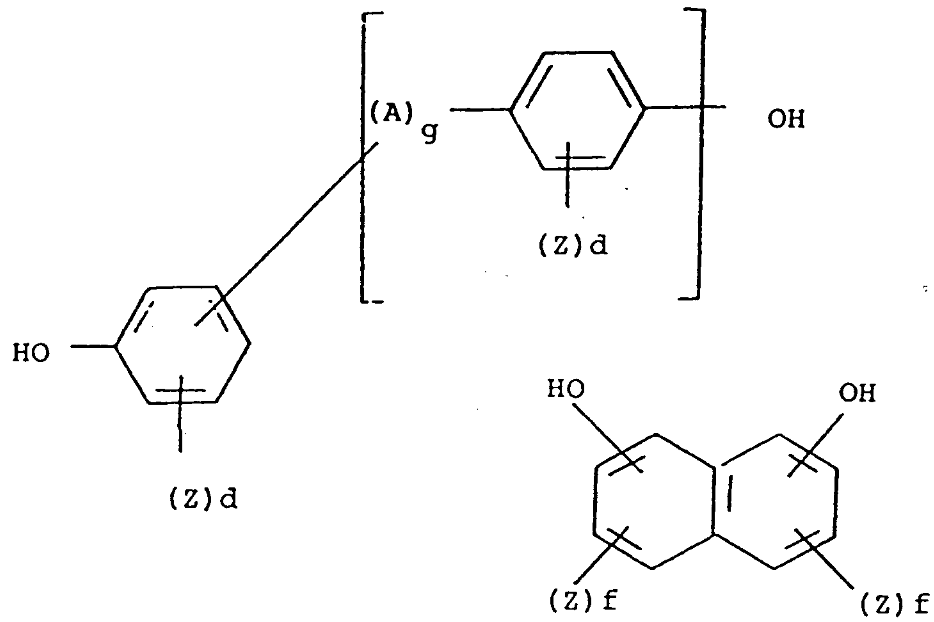

(1)

(2)

,

worin

A eine Alkylen-Gruppe mit 1 bis 8 Kohlenstoff-Atomen, eine Alkyliden-Gruppe mit 2 bis 8 Kohlenstoff-Atomen, eine Cycloalkylen-Gruppe mit 5 bis 15 Kohlenstoff-Atomen, eine Cycloalkyliden-Gruppe mit 5 bis 15 Kohlenstoff-Atomen, eine Carbonyl-Gruppe, ein Sauerstoff-Atom, ein Schwefel-Atom, einen -SO- oder $-SO_2-$ -Rest oder einen Rest der allgemeinen Formel

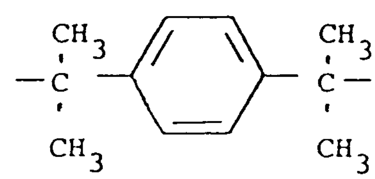 oder 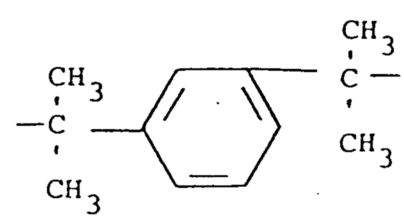

bezeichnet,

g die Zahl 0 oder 1 bezeichnet,

e die Zahl 0 oder 1 bezeichnet,

Z F, Cl, Br oder einen $C_1$- bis $C_2$-Alkyl-Rest bezeichnet und, wenn mehrere Z-Reste Substituenten an einem Aryl-Rest sind, sie identisch oder verschieden sein können,

d 0 oder eine ganze Zahl von 1 bis 4 bezeichnet und

f 0 oder eine ganze Zahl von 1 bis 3 bezeichnet.

Zu den in der Praxis der vorliegenden Erfindung brauchbaren Dihydroxy-Verbindungen zählen Hydrochinon, Resorcin, Bis-(hydroxyphenyl)alkane, Bis-(hydroxyphenyl)cycloalkane, Bis-(hydroxyphenyl)ether, Bis-(hydroxyphenyl)ketone, Bis-(hydroxyphenyl)sulfoxide, Bis-(hydroxyphenyl)sulfone und $\alpha,\alpha$-Bis-(hydroxyphenyl)diisopropylbenzole. Diese und weitere geignete aromatische Dihydroxy-Verbindungen werden beispielsweise beschrieben in den US-PSen 3 028 365, 2 999 835, 3 148 172, 3 271 368, 2 991 273, 3 271 367, 3 280 078, 3 014 891 und 2 999 846 (auf die hier sämtlich Bezug genommen wird), in den DE-OSen 1 570 703, 2 063 050, 2 063 052, 2 211 956 und 2 211 957, in der FR-PS 1 561 518 sowie in der

Monographie von H. Schnell, "Chemistry and Physics of Polycarbonates", Interscience Publishers, New York 1964. Weitere Beispiele für geeignete Dihydroxy-Verbindungen sind 2,2-Bis-(4-hydroxyphenyl)propan (Bisphenol A), 2,4-Bis-(4-hydroxyphenyl)-2-methylbutan, 1,1-Bis-(4-hydroxyphenyl)cyclohexan, α,α-Bis-(4-hydroxyphenyl)-p-diisopropylbenzol, 2,2-Bis-(3-chloro-4-hydroxyphenyl)propan, Hydroxybenzophenon und 4,4'-Sulfonyl-diphenol; die am meisten bevorzugte ist 2,2-Bis-(4-hydroxyphenyl)propan (Bisphenol A).

Die Polycarbonate der Erfindung können in ihrer Struktur Einheiten enthalten, die sich von einer oder mehreren geeigneten Dihydroxy-Verbindungen ableiten.

Die Herstellung der Polycarbonat-Harze kann mittels jedes beliebigen, in der Technik bekannten Verfahrens vorgenommen werden, beispielsweise durch das Grenzflächen-Polykondensationsverfahren, durch Polykondensation in homogener Phase oder durch Umesterung.

Die geeigneten Verfahren und die damit einhergehenden Ausgangsstoffe, Katalysatoren, Lösungsmittel und Bedingungen sind bekannt und, unter anderen, in den DE-PSen 1 046 311 und 962 274 und in den US-PSen 3 248 414, 3 153 008, 3 215 668, 3 187 065, 3 028 365, 2 999 846, 2 999 835, 2 964 974, 2 970 137, 3 912 638 und 1 991 273 beschrieben.

Bei der Herstellung der Polycarbonat-Harze gemäß der vorliegenden Erfindung können monofunktionelle Ausgangsstoffe wie Monophenole eingesetzt werden, um ihre jeweiligen Molekulargewichte zu begrenzen. Verzweigungsmittel können ebenfalls in dem Harz, das zur Herstellung der Platte - der Kernschicht oder des Substrats - der vorliegenden Erfindung verwendet wird, herangezogen werden. Eine Verzweigung kann durch Einarbeitung kleiner Mengen, vorzugsweise zwischen 0,05 und 2,0 Mol-% (bezogen auf die eingesetzten Diphenole), trifunktioneller oder mehr als trifunktioneller Verbindungen, insbesondere von Verbindungen mit drei oder mehr aromatischen Hydroxyl-Gruppen, erzielt werden. Polycarbonate dieses Typs werden beispielsweise in den DE-OSen 1 570 533, 1 595 762, 2 116 974 und 2 113 347, der GB-PS 1 079 821 und der US-PS 3 544 514 (auf die hier Bezug genommen wird) beschrieben.

Die anhaftende Schicht im vorliegenden Kontext wird aus einem linearen Polycarbonat hergestellt.

Einige Beispiele für Verbindungen mit drei oder mehr als drei Phenyl-Hydroxyl-Gruppen, die verwendet werden können, sind Phloroglucin, 4,6-Dimethyl-2,4,6-tri(4-hydroxyphenyl)heptan, 2,4,6-Trimethyl-2,4,6-tri(4-hydroxyphenyl)heptan, 1,4,5-Tri-(4-hydroxyphenyl)benzol, 1,1,2-Tri-(4-hydroxyphenyl)ethan, Tri-(4-hydroxyphenyl)phenylmethan, 2,2-Bis[4,4-bis-(4-hydroxyphenyl)cyclohexyl]propan, 2,4-Bis-(4-hydroxyphenylisopropyl)phenol, 2,6-Bis-(2-hydroxy-5'-methylbenzyl)-4-methylphenol, 2-(4-Hydroxyphenyl)-2-(2,4-dihydroxyphenyl)propan, Hexa-{4-(4-hydroxyphenylisopropyl)phenyl}orthoterephthalsäureester, Tetra-(4-hydroxyphenyl)-methan-tetra-{4-(4-hydroxyphenylisopropyl)phenoxy}methan und 1,4-Bis-{(4',4"-dihydroxytriphenyl)-methyl}benzol. Einige der anderen trifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol.

Die in der Praxis der vorliegenden Erfindung geeigneten Harze schließen Polycarbonat auf Phenolphthalein-Basis, Copolycarbonate und Terpolycarbonate ein, wie sie in den US-PSen 3 036 036 und 4 210 741 beschrieben sind, auf die beide hier Bezug genommen wird.

Das Bisbenzotriazol der vorliegenden Erfindung entspricht der Formel (3)

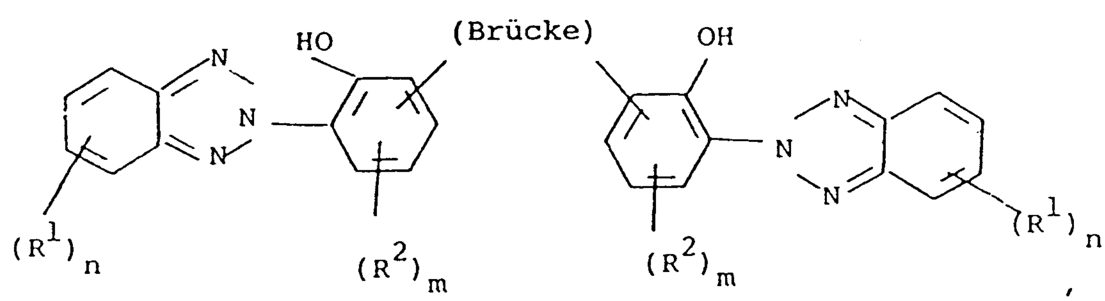

(3)

,

in der

{Brücke}

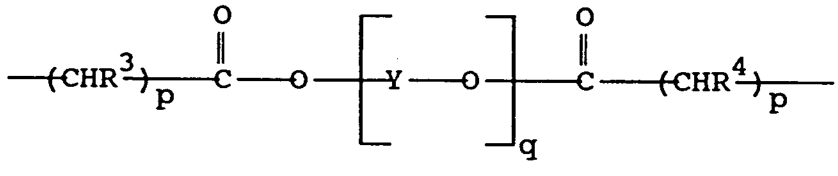

ist, worin

p eine ganze Zahl von 0 bis 3 ist,

q eine ganze Zahl von 1 bis 10 ist und

Y

$-CH_2-CH_2-$, 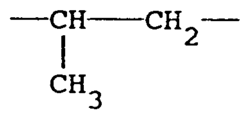,

$-(CH_2)_3-$, $-(CH_2)_4-$, $-(CH_2)_5-$ oder $-(CH_2)_6-$

bezeichnet,

wobei es in diesem Fall bevorzugt wird, daß die OH-Gruppe in para-Stellung zu der verbrückenden Gruppe steht. In der vorstehenden Formel sind $R^1$ und $R^2$ unabhängig voneinander ein Wasserstoff- oder ein Halogen-Atom, ein $C_1$- bis $C_{12}$-Alkoxy-, $C_7$- bis $C_{18}$-Arylalkoxy- oder ein $C_1$- bis $C_{10}$-Alkyl-, -Cycloalkyl-, -Aralkyl- oder -Aryl-Rest, und $R^3$ und $R^4$ sind unabhängig voneinander ein Wasserstoff-Atom oder ein $C_1$- bis $C_{10}$-Alkyl-, -Cycloalkyl-, -Aralkyl- oder -Aryl-Rest, n ist eine ganze Zahl von 0 bis 4, und m ist eine ganze Zahl von 1 bis 3.

Eine bevorzugte Ausführungsform wird durch ein Bis-benzotriazol repräsentiert, in dem ⁅Brücke⁆

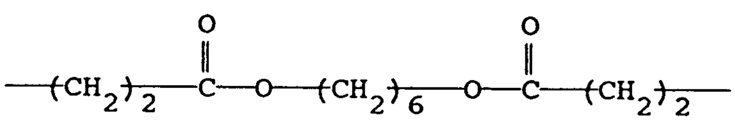

bezeichnet und in para-Stellung zu den OH-Gruppen angeordnet ist und $R^2$ tertiäres Butyl in ortho-Stellung zu den Hydroxyl-Gruppen ist.

Die Polycarbonat-Platte der Erfindung kann durch Extrusion in bekannter Weise hergestellt werden. Sie kann klar oder pigmentiert sein, und ihre Dicke kann vorzugsweise im Bereich von 3,2 bis 6,4 mm (1/8" bis 1/4") liegen, obwohl dies nicht kritisch für die Erfindung ist. Die Extrusion von Polycarbonaten zur Bildung von Platten ist bekannt und im Stand der Technik offenbart.

Gegenstand der vorliegenden Erfindung ist somit auch die Herstellung einer Polycarbonatplatte gemäß Anspruch 4 des vorliegenden Patents.

Die Platte der Erfindung ist weiterhin dadurch gekennzeichnet, daß die genannte anhaftende Schicht die oberste Schicht ist. Das bedeutet, daß auf ihre von der Polycarbonat-Platte abgewandten Oberfläche keine weiteren Schichten aufgebracht werden. Während die Platte andere Zwischenschichten eingelagert zwischen der Folie und der anhaftenden Schicht enthalten kann und während eine anhaftende Schicht entweder auf eine oder auf beide Seiten der Platte aufgebracht werden kann, wird die zweite Oberfläche der anhaftenden Schicht nicht in irgendeiner Weise bedeckt, und sie ist die Oberfläche, die dafür vorgesehen ist, mit den fleckenbildenden verschmutzenden Flüssigkeiten in Berührung zu gelangen.

In der erfindungsgemäßen Ausführungsform werden die Folie und die anhaftende Schicht nach bekannten Lehren coextrudiert, und ihre Oberflächen werden bei einer von der Extrusion resultierenden erhöhten Temperatur, gegebenenfalls in Kombination mit der Anwendung von Druck, miteinander in Berührung gebracht, um eine Haftung der Platten aneinander zu bewirken. Die Coextrusion ist eine in der Technik wohlbekannte Methode.

## Patentansprüche

**1.** Polycarbonat-Platte, umfassend eine Polycarbonat-Platte, bei der wenigstens eine ihrer Oberflächen mit einer anhaftenden Schicht überzogen wird, die ein lineares Polycarbonat-Harz und etwa 1 bis 15 %, bezogen auf dessen Gewicht, eines Bis-benzotriazols entsprechend der Formel

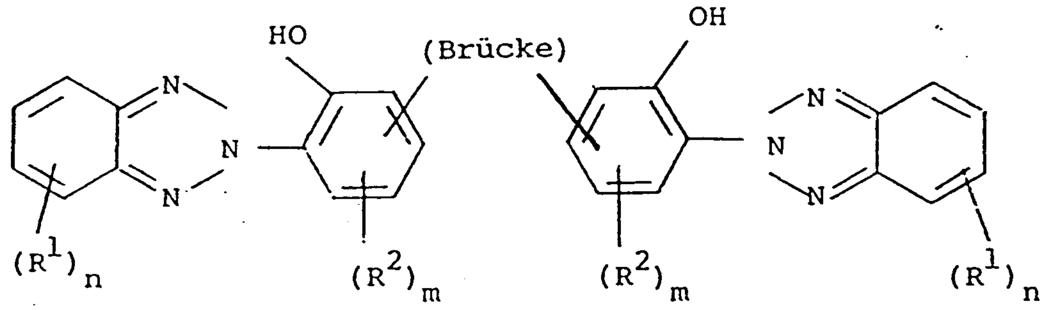 (3)

enthält, in der

$R^1$ und $R^2$ unabhängig voneinander ein Wasserstoff- oder ein Halogen-Atom, ein $C_1$- bis $C_{12}$-Alkoxy-, $C_7$- bis $C_{18}$-Arylalkoxy- oder ein $C_1$- bis $C_{10}$-Alkyl-, -Cycloalkyl-, -Aralkyl- oder -Aryl-Rest sind und

n eine ganze Zahl von 0 bis 4 ist, und

m eine ganze Zahl von 1 bis 3 ist,

$-(Brücke)-$

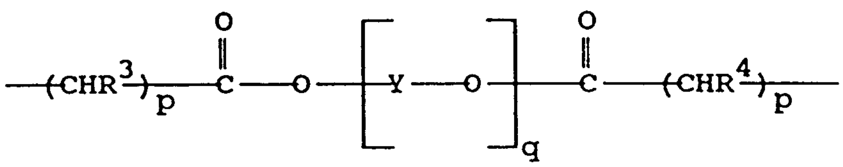

ist, worin

p eine ganze Zahl von 0 bis 3 ist,

q eine ganze Zahl von 1 bis 10 ist und

Y

$-CH_2-CH_2-$, 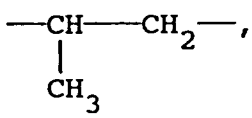,

$-(CH_2)_3-$, $-(CH_2)_4-$, $-(CH_2)_5-$ oder $-(CH_2)_6-$

bezeichnet und

$R^3$ und $R^4$ unabhängig voneinander ein Wasserstoff-Atom oder ein $C_1$- bis $C_{10}$-Alkyl-, -Cycloalkyl-, -Aralkyl- oder -Aryl-Rest sind, wobei

die anhaftende Schicht etwa 5 bis 100 µm dick ist und nur eine der Oberflächen derselben verbunden ist.

2. Platte nach Anspruch 1, wobei das Bis-benzotriazol in der anhaftenden Schicht in einer Menge von 3 bis 10 %, bezogen auf das Gewicht der Schicht, vorliegt.

3. Platte nach Anspruch 1, wobei $-(Brücke)-$

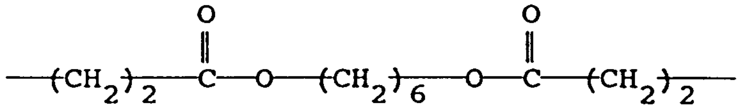

in para-Stellung zu den Hydroxyl-Gruppen bezeichnet und $R^2$ tertiäres Butyl in ortho-Stellung zu den Hydroxyl-Gruppen ist.

**4.** Verfahren zur Herstellung einer Polycarbonat-Platte, umfassend das Coextrudieren einer Polycarbonat-Platte und wenigstens einer anhaftenden Schicht und das In-Berührung-Bringen wenigstens einer Oberfläche der Platte mit einer Oberfläche der Schicht, während sich beide auf einer von der Extrusion resultierenden erhöhten Temperatur befinden, gegebenenfalls in Kombination mit der Anwendung von Druck, um eine Haftung beim Kontakt zwischen den Oberflächen zu bewirken,
dadurch gekennzeichnet, daß die Platte ein Polycarbonat-Harz umfaßt und die anhaftende Schicht ein lineares Polycarbonat-Harz und eine der Formel

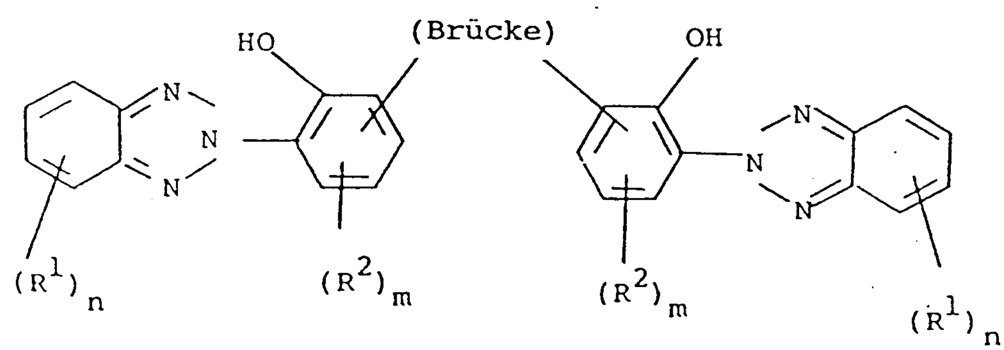

(3)

entsprechende Verbindung umfaßt, in der

$R^1$ und $R^2$ unabhängig voneinander ein Wasserstoff- oder ein Halogen-Atom, ein $C_1$- bis $C_{12}$-Alkoxy-, $C_7$- bis $C_{18}$-Arylalkoxy- oder ein $C_1$- bis $C_{10}$-Alkyl-, -Cycloalkyl-, -Aralkyl- oder -Aryl-Rest sind und

n eine ganze Zahl von 0 bis 4 ist, und

m eine ganze Zahl von 1 bis 3 ist,

$\{$Brücke$\}$

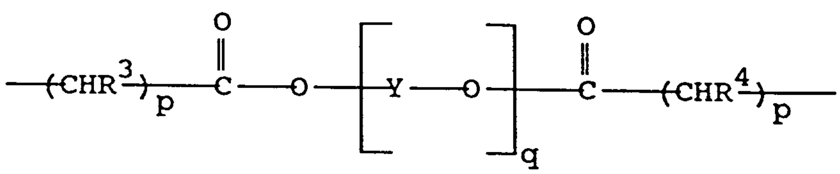

ist, worin

p eine ganze Zahl von 0 bis 3 ist,

q eine ganze Zahl von 1 bis 10 ist und

Y

$-CH_2-CH_2-$, 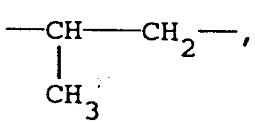,

$-(CH_2)_3-$, $-(CH_2)_4-$, $-(CH_2)_5-$ oder $-(CH_2)_6-$

bezeichnet und

$R^3$ und $R^4$ unabhängig voneinander ein Wasserstoff-Atom oder ein $C_1$- bis $C_{10}$-Alkyl-, -Cycloalkyl-, -Aralkyl- oder -Aryl-Rest sind,

und daß die anhaftende Schicht etwa 5 bis 100 $\mu$m dick ist und nur eine der Oberflächen derselben

verbunden ist.

## Claims

1. Polycarbonate board comprising a polycarbonate board in which at least one of its surfaces is coated with an adherent layer containing a linear polycarbonate resin and about 1 to 15%, based on the weight of the latter, of a bis-benzotriazole corresponding to the following formula

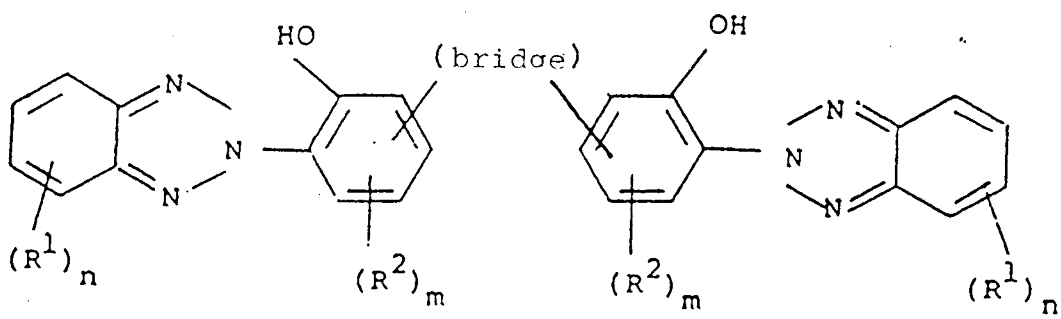

(3)

in which

$R^1$ and $R^2$ denote, independently of one another, a hydrogen or halogen atom, a $C_1$- to $C_{12}$-alkoxy, $C_7$- to $C_{18}$-aryloxy or $C_1$- to $C_{10}$-alkyl, cycloalkyl, aralkyl or aryl group and

n stands for an integer from 0 to 4 and

m stands for an integer from 1 to 3 and the (bridge) corresponds to the formula

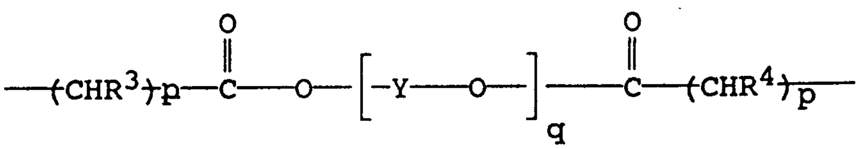

wherein

p stands for an integer from 0 to 3,

q stands for an integer from 1 to 10 and

Y stands for

$-CH_2-CH_2-$, 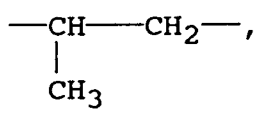,

$-(CH_2)_3-$, $-(CH_2)_4-$, $-(CH_2)_5-$ or

$-(CH_2)_6-$

and

$R^3$ and $R^4$ denote, independently of one another, a hydrogen atom or a $C_1$- to $C_{10}$-alkyl, cycloalkyl, aralkyl or aryl group,

the adhering layer having a thickness of about 5 to 100 µm and only one of the surfaces of said layer being attached.

2. Board according to Claim 1, in which the bis-benzotriazole is present in the adherent layer in a quantity of from 3 to 10%, based on the weight of the layer.

3. Board according to Claim 1, in which the -(bridge)- denotes a group of the formula

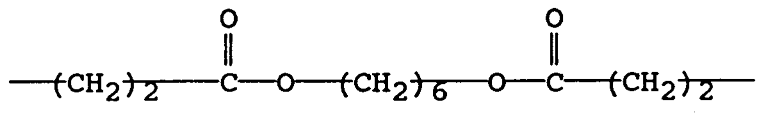

in the para-position to the hydroxyl groups and $R^2$ stands for a tertiary butyl group in the ortho-position to the hydroxyl groups.

**4.** A process for the production of a polycarbonate board, comprising the coextrusion of a polycarbonate board and at least one adherent layer and the bringing into contact of at least one surface of the board with a surface of the layer while both are at an elevated temperature resulting from the extrusion, optionally in combination with the application of pressure to bring about adherence on contact between the surfaces, characterised in that the board comprises a polycarbonate resin and the adherent layer comprises a linear polycarbonate resin and a compound corresponding to the following formula

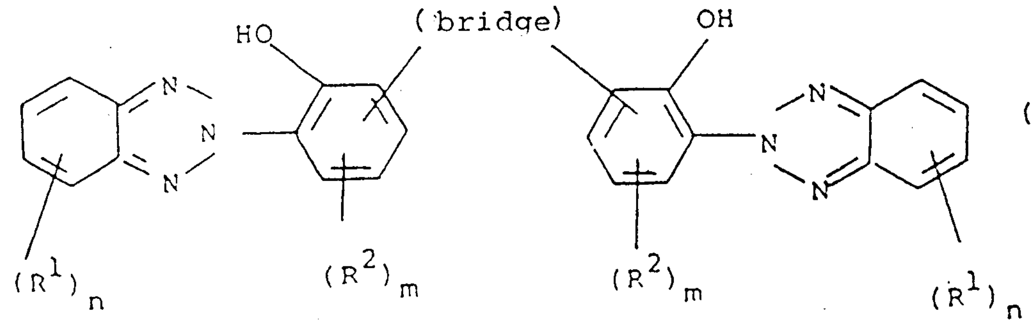

(3)

in which

| | |
|---|---|
| $R^1$ and $R^2$ | denote, independently of one another, a hydrogen atom or halogen atom, a $C_1$- to $C_{12}$-alkoxy, $C_7$- to $C_{18}$-arylalkoxy or a $C_1$- to $C_{10}$-alkyl, cycloalkyl, aralkyl or aryl group and |
| n | stands for an integer from 0 to 4 and |
| m | stands for an integer from 1 to 3 and |

the (bridge) corresponds to the following formula

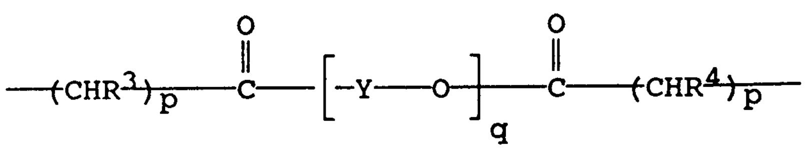

wherein

| | |
|---|---|
| p | stands for an integer from 0 to 3 and |
| q | stands for an integer from 1 to 10 and |
| Y | corresponds to the following formula: |

$-CH_2-CH_2-$, 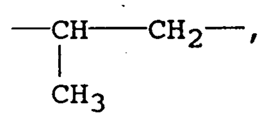,

$-(CH_2)_3-$, $-(CH_2)_4-$, $-(CH_2)_5-$ or

$-(CH_2)_6-$

and

$R^3$ and $R^4$ denote, independently of one another, a hydrogen atom or a $C_1$- to $C_{10}$-alkyl, -cycloalkyl, -aralkyl or -aryl group

and in that the adherent layer has a thickness of about 5 to 100 $\mu$m and only one of the surfaces of said layer is attached.

## Revendications

1. Plaque en polycarbonate, comprenant une plaque de polycarbonate dont au moins une surface a été revêtue d'une couche adhérente qui contient une résine de polycarbonate linéaire et environ 1 à 15 %, par rapport à son poids, d'un bis-benzotriazole répondant à la formule :

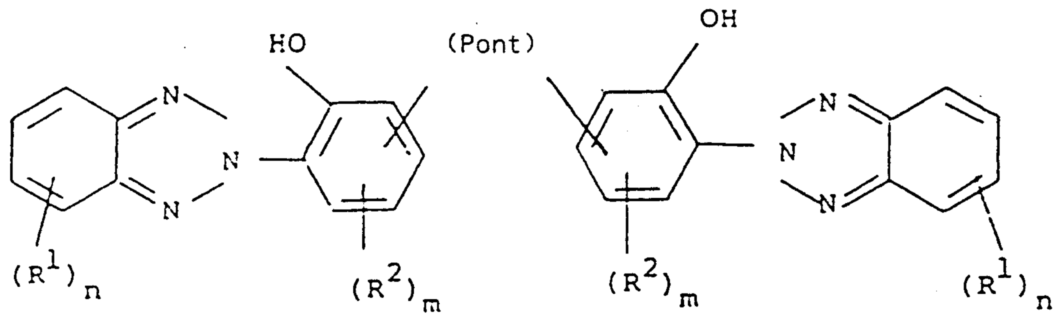

(3)

dans laquelle

$R^1$ et $R^2$ représentent chacun, indépendamment l'un de l'autre, un atome d'hydrogène ou un atome d'halogène, un reste alcoxy en $C_1$-$C_{12}$, arylalcoxy en $C_7$-$C_{18}$ ou un reste alkyle, cycloalkyle, aralkyle ou aryle en $C_1$-$C_{10}$, et

n est un nombre entier valant 0 à 4, et

m est un nombre entier valant 1 à 3,

le terme de pontage a pour formule :

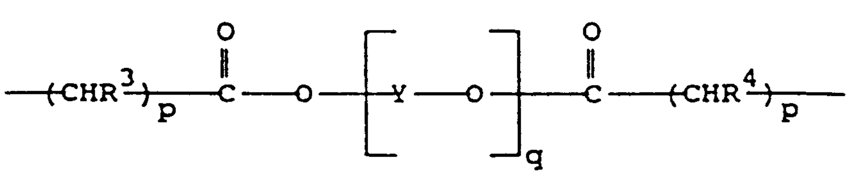

dans laquelle

p est un nombre entier valant 0 à 3,

q est un nombre entier valant 1 à 10, et

Y représente

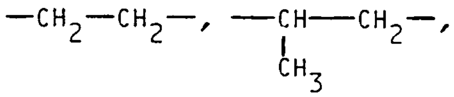

$-(CH_2)_3-$, $-(CH_2)_4-$, $-(CH_2)_5-$ ou $-(CH_2)_6-$

et $R^3$ et $R^4$ représentent chacun, indépendamment l'un de l'autre, un atome d'hydrogène ou un reste alkyle en $C_1$-$C_{10}$, cycloalkyle, aralkyle ou aryle, la couche adhérente ayant une épaisseur d'environ 5 à 100 µm et n'étant fixée que sur une des surfaces de plaque.

**2.** Plaque selon la revendication 1, dans laquelle le bis-benzotriazole est présent, dans la couche adhérente, en une quantité de 3 à 10 %, par rapport au poids de la couche.

**3.** Plaque selon la revendication 1, dans laquelle le groupe de pontage, ou pont,

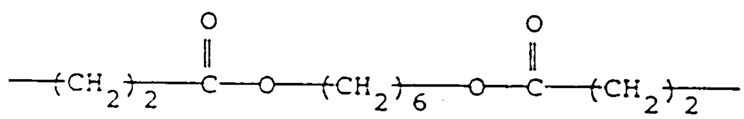

est en position para par rapport aux groupes hydroxyles et $R^2$ représente un groupe tertiobutyle en position ortho par rapport aux groupes hydroxyles.

**4.** Procédé pour préparer une plaque de polycarbonate, comprenant la coextrusion d'une plaque de polycarbonate et d'au moins une couche adhérente et la mise en contact d'au moins une surface de la plaque avec une surface de la couche, pendant qu'elles se trouvent toutes deux à une température élevée résultant de l'extrusion, éventuellement en combinaison avec l'application d'une pression, pour réaliser une adhérence par contact entre les surfaces,
procédé caractérisé en ce que la plaque comprend une plaque de polycarbonate et la couche adhérente comprend une résine de polycarbonate linéaire et un composé répondant à la formule :

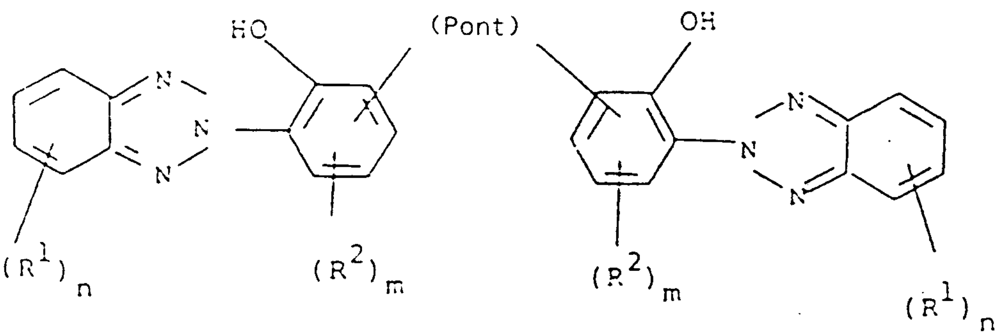

(3)

dans laquelle
$R^1$ et $R^2$ représentent chacun, indépendamment l'un de l'autre, un atome d'hydrogène ou un atome d'halogène, un reste alcoxy en $C_1$-$C_{12}$, un reste aryloxy en $C_7$-$C_{18}$ ou un reste alkyle en $C_1$-$C_{10}$, cycloalkyle, aralkyle ou aryle, et
n est un nombre entier valant de 0 à 4, et
m est un nombre entier valant 1 à 3,
le terme de pontage a pour formule :

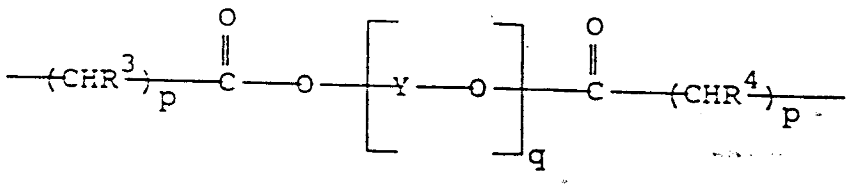

dans laquelle
p est un nombre entier valant 0 à 3,
q est un nombre entier valant 1 à 10 et
Y représente

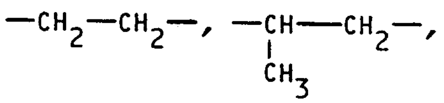

$-(CH_2)_3-$, $-(CH_2)_4-$, $-(CH_2)_5-$ ou $-(CH_2)_6-$

et $R^3$ et $R^4$ représentent chacun, indépendamment l'un de l'autre, un atome d'hydrogène ou un reste alkyle en $C_1$-$C_{10}$, cycloalkyle, aralkyle, ou aryle,
et en ce que la couche adhérente a une épaisseur d'environ 5 à 100 µm et en ce qu'une seule de ses surfaces est ainsi fixée.